# EUROPEAN PATENT APPLICATION

(11) **EP 2 270 312 A1**
(43) Date of publication of application: **05.01.2011**
(21) Application number: 09164277.7
(22) Date of filing: 01.07.2009
(51) Int. Cl.: F01D 5/14, F02K 1/46, F03D 1/06, B64C 11/16

(54) **Aero- or hydrodynamic construction**

(71) Applicant: PEM-Energy Oy, 00210 Helsinki (FI)
(72) Inventor: Pylkkänen, Juhani, 41340, Laukaa (FI); Seppälä, Mikael, 00210, Helsinki (FI); Rönkkö, Väinö, 74120, Iisalmi (FI)
(74) Representative: Roitto, Klaus

(57) **Abstract**

The invention relates to an aero- or hydrodynamic construction, which is arranged to be in relative motion with respect to a medium, the construction comprising a front end (2) where the medium is encountered and a rear end (3) where the medium exits the construction, the construction comprising an aerofoil (10) with an end (14) for encountering the medium and an end (15) for leaving the medium. In order to keep undesired energy losses caused by the construction when it moves with respect to the medium very small, in which case it would operate with high efficiency and have a low noise level, the construction is **characterized in that** the aerofoil comprises a ridge part (4) and a valley part (5), which constitute a flow channel which is set at an angle (α) to the direction of motion of the construction in order to remove the medium in the form of tubular turbulent flow, a micro-vortex, from the rear end of the construction, the turbulent flow being substantially opposite to the direction of motion of the construction.

## Description

### Background of the invention

The invention relates to an aero- or hydrodynamic construction, which is arranged to be in relative motion with respect to a medium, the construction comprising a front end where the medium is encountered and a rear end where the medium exits the construction, the construction comprising an aerofoil with an end for encountering the medium and an end for leaving the medium. The construction may be an aerodynamic or a hydrodynamic construction.

Such constructions are known from different technical applications. Typical examples include aircraft wings, aerofoils and fuselage parts as well as different propellers. For example, publication EP 0 244 344 A2 discloses a wing construction or, more generally, a carrying plane comprising a plane and an undulated structure at its trailing end. The purpose of the undulated structure is to diminish drag applied to the upper surface of the wing construction, a greater lift is provided for the wing construction by increasing the pressure difference between the upper and lower surface of the wing construction, and its sensitivity to stalling is reduced. The object of the wing construction is to eliminate three-dimensional formation of vortexes between laminar flows and surfaces.

Generally speaking, the purpose is to design aero- and hydrodynamic constructions in such a manner that, while moving with respect to a medium, they produce as few losses and as little sound as possible and their efficiency would be as high as possible. In general, it may also be said that the problem of aero- and hydrodynamics is that they cause a number of energy losses, vibrations, and noise.

It is known that a negative pressure tends to develop at the rear end of wings and behind the trailing edge. Since negative pressure causes resistance for the wing motion, the aim has been to reduce the negative pressure. For this purpose, the rear ends of aircraft wings are known to be provided with antennas and movable aerofoils so that air would leave the trailing edges of the wing as laminar flow and would thus smoothly flow away from the trailing edge of the wing. Antennas bring advantages but their effect is nevertheless not as significant as desirable. Controlling movable wings is complicated particularly under varying conditions.

### Brief description of the invention

It is an object of the invention to provide a novel construction, which is designed to be in relative motion with respect to a medium and has better aero-and hydrodynamic properties than the known constructions. Because of improved aero- and hydrodynamic properties, the efficiency of the construction is also better than that of the known constructions. The construction is **characterized in that** the aerofoil comprises a ridge part and a valley part, which constitute a flow channel which is set at an angle to the direction of motion of the construction in order to remove the medium in the form of tubular turbulent flow from the rear end of the construction, the main direction of the turbulent flow being substantially opposite to the direction of motion of the construction. It may be said that the direction of motion of the construction determines the direction in which the medium is encountered. A tubular turbulent flow, i.e. a flow in the shape of a tube, may be referred to as a flow in the shape of a turbulence tube, a turbulence tube, or a micro-vortex.

The basic idea of the invention is thus to generate, by means of one or more aerofoils or a shape/structure acting like an aerofoil, a tubular turbulent flow, in most cases a plurality of parallel tubular turbulent flows, at the rear end, i.e. the trailing end of the aero- or hydrodynamic construction, whereby a circular, i.e. a rotational, motion around the longitudinal axis of the flows takes place alternately in opposite directions, which means that the alternate turbulence tubes turn with respect to one another in a rolling manner. By its nature, the tubular turbulent flow is a like a vortex flow. Since the diameter of a vortex in the flow is very small, the flow may be called a micro-vortex. Thanks to the turbulence tube, no negative pressure/suction is generated at the rear end, i.e. the trailing end, of the construction, tending to pull the hydrodynamic construction backwards, but, on the contrary, a low pressure is generated, diminishing the tendency to pull the hydrodynamic construction backwards.

The construction according to the invention may be a jet engine comprising at least two aerofoils arranged diametrically to one another inside the jet engine casing, the aerofoils being arranged to guide away the exhaust gases of the jet engine from the rear end of the jet engine in the form of a tubular turbulent flow, and additionally at least two aerofoils arranged diametrically to one another on the outer surface of the jet engine casing to produce tubular air turbulent flows, whereby the aerofoils provided on the surface of the casing are arranged to guide the tubular air turbulent flows in a rolling manner on both sides of the tubular turbulent flow of the exhaust gases.

The aero- or hydrodynamic construction is preferably a wing or blade comprising a leading edge constituting the front end of the construction, and a trailing edge constituting the rear end of the construction and comprising an undulated region, from which flow channels consisting of ridge parts and valley parts extend towards the leading edge of the wing or blade, the flow channels being at said angle to the direction of motion of the wing or blade - and, in practice, mostly to the direction in which the medium is encountered - in order to produce, on the trailing side of the wing or blade, a plurality of adjacent tubular turbulent flows having alternately opposite rotation directions.

At the aerofoils or the flow channels formed by the undulated shape, the medium is set to tubular circular motion on both the upper and the lower surface of the wing or blade as a result of a small positive or negative pressure. Because of the produced tubular turbulent flows and the alternately opposite rotation directions thereof, the resistance caused by the wing or blade in the medium (air, gas, water or other liquid, steam) is very low.

The undulated structure preferably follows the shape of a sinusoidal wave, because it is suitable in the technical sense of flow, is easy to manufacture and strengthens the construction of the wing or blade.

The flow channels formed by the aerofoils are preferably at an angle of 5 to 50 degrees to the direction of motion of the wing or blade. The angle is selected from the lower range when the speed of motion of the wing or blade in the medium is high, and from the higher range when the speed of motion of the wing or blade in the medium is low. When the speed of the wing or blade in relation to the medium exceeds about 80 km/h, the significance of the aerofoils and the advantages of the invention increase.

The leading edge of the wing or blade is preferably free of ridge parts and valley parts, which means that the flow channels extending from the undulated region of the wing or blade towards the leading edge of the wing or blade only extend to a part of the width of the wing or blade. As the leading edge of the wing or blade is free of ridge and valley parts, it is relatively easy to manufacture the wing or blade.

In accordance with the invention, the wing or blade may preferably be a carrying plane in linear or curvilinear motion, such as a rotor blade of a wind power plant, aircraft wings, motor and fuselage, a helicopter rotor blade, a fan blade, or a propeller blade.

The preferred embodiments of the invention are disclosed in the attached claims 2 to 12.

The greatest advantages of the aero- or hydrodynamic construction of the invention are that when moving with respect to a medium, it causes only small undesired energy losses, which means that is operates with high efficiency and has a low noise and vibration level. Because of this, it improves, for instance, the efficiency of wind power plants and the fuel economy of aircraft, while it also reduces noise and vibrations caused by the construction in said applications. The list of advantages provided by the invention also includes that the invention substantially diminishes flow-induced loads on the structures, substantially reduces losses in the flow and mass transfer, substantially reduces vibration and sound in the flows, and displaces the flowing medium efficiently and with small power demand, and improves the strength and rigidity of the construction. The significance of the invention in reducing flow losses and sound is particularly great in hydrodynamic constructions, such as turbine blades, where the speed of motion is high.

### Brief description of the figures

In the following, the invention will be explained in greater detail in connection with the preferred embodiments and with reference to the attached drawing, in which:
Figure 1 shows an application of the invention,
Figure 2 shows an inventive construction of the application of Figure 1, i.e. a rotor blade of a wind power plant,
Figure 3 shows an enlarged view of a detail from Figure 1 and a procedure for implementing the blade of Figure 1,
Figure 4 shows the detail of Figure 3 from above,
Figure 5 shows a detail of Figure 2 in the direction of arrow A,
Figure 6 illustrates the blade of Figure 2 from the side, i.e. in the direction of arrow B,
Figure 7 illustrates how flows are produced in the blade of Figure 2, seen from the viewing angle of Figure 6,
Figure 8 illustrates how flows are produced in the blade of Figure 2, viewed in the direction of arrow C of Figure 7, i.e. from above,
Figure 9 shows an alternative implementation for Figure 3,
Figures 10 and 11 illustrate how flows are produced in the blade sets of Figures 3 and 9,
Figure 12 shows a propeller according to the invention,
Figures 13 to 15 illustrate how the invention is applied to an aircraft,
Figure 16 illustrates how flows are produced in the construction of Figure 15, i.e. the rear wings of an aircraft, and
Figures 17 and 18 illustrate the application of the invention to a jet engine.

### Detailed description of the invention

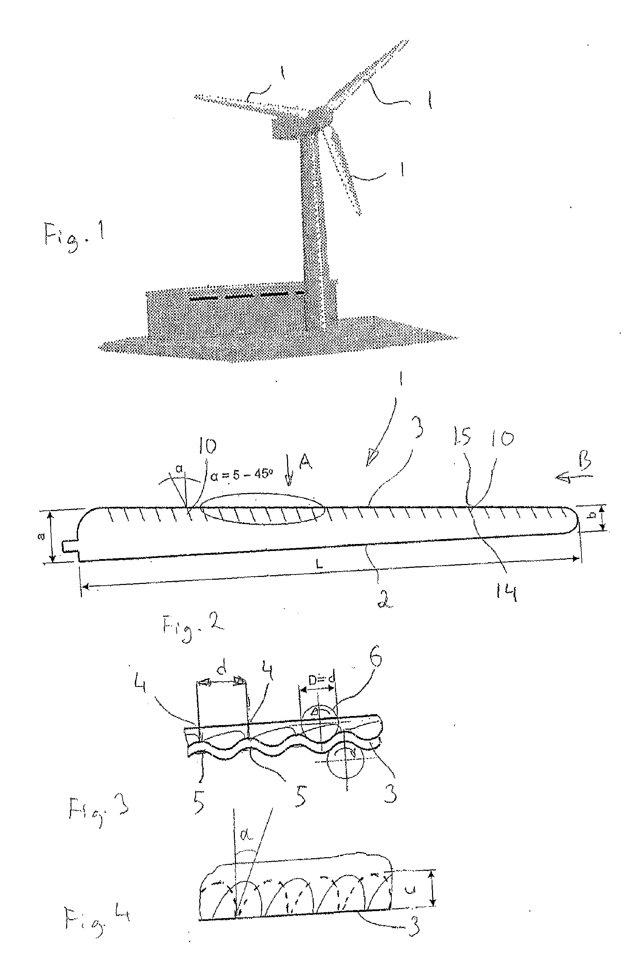

Figure 1 shows a wind power plant comprising a rotor with three blades 1. The blades 1, the length L of which is, for example, 2 to 100 m, are formed, according to the invention, as shown in Figure 2. The leading edge and trailing edge of the blade 1 are marked in the figure with reference numerals 2 and 3, respectively.

Figures 3 and 4, which show an enlarged view of the circled region of Figure 2, illustrate the structure of the trailing edge 3 of the blade 1. Figure 3 shows that the entire length of the trailing edge 3 is arranged to be undulated, i.e. has an undulated shape. The length of the undulated region may be smaller than that of the blade 1, in which case it is arranged in a place where the air velocity is high, i.e. at least in the region of the blade 1 tip. The undulations comprise ridge parts 4 and valley parts 5, which extend from the trailing edge 3 of the blade towards the leading edge 2 of the blade at an angle of α = approximately 30 degrees to the direction of motion of the blade. The ridge parts 4 and the valley parts 5 form flow channels on the opposite sides of the blade, the channels being at said angle α to the direction of motion of the blade. In the example of Figure 2, the direction of motion of the blade 1 is substantially perpendicular to the leading and trailing edges of the blade and opposite to the direction of arrow A of Figure 2. The higher the speed of motion of the blade is, the smaller the angle α is selected. The angle α is preferably 5 to 45 degrees. The angle α must presumably always be bigger than 3 degrees, and preferably more than 5 degrees. The upper limit of the angle α may be slightly above said range, for example 50 degrees.

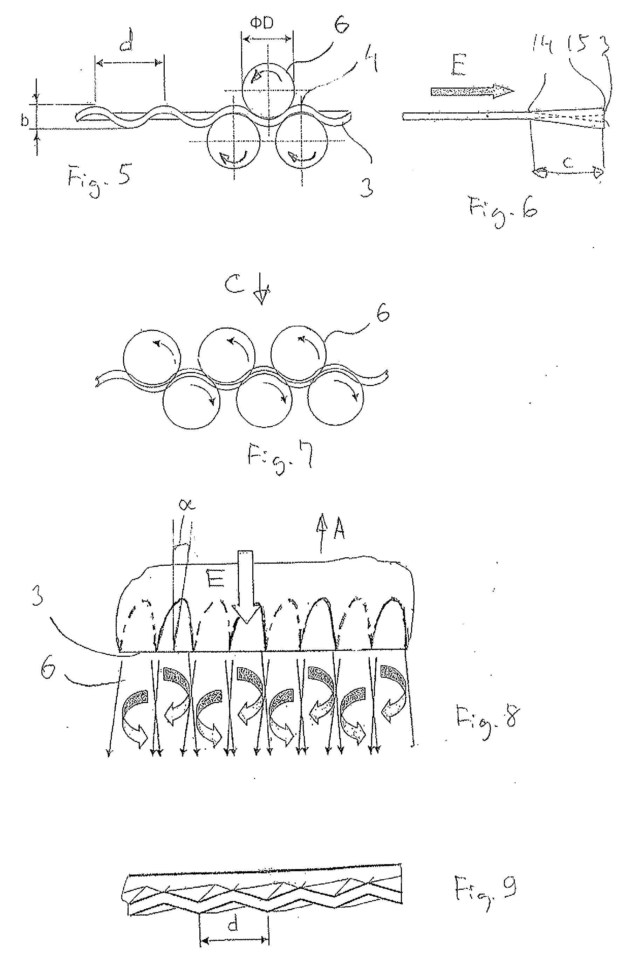

The ridge parts 4 and the valley parts 5 form an undulated structure on the opposite sides of the blade 1. The flow channels on the upper surface of the blade are drawn with a continuous line and the flow channels on the lower surface of the blade with a broken line. The flow channels, more specifically the walls of the flow channels, form aerofoils 10, which are at said angle α to the direction of motion of the blade 1. The length c of the aerofoils 10, corresponding to the length of the ridge parts 4 and the valley parts 5, is preferably 0.2 to 0.6 x the height b between the ridge 4 and the valley 5 (see Figures 4 and 5). Thus, the aerofoils 10 do not extend over the entire width of the blade 1 but are preferably only arranged at the rear end of the blade 1, i.e. in the region of the trailing edge 3. The distance d between the ridge parts 4 (see Figure 3) is 100 mm. The distance d varies according to the application; the range of distance of 30 to 200 mm is used in most applications. The end of the aerofoils 10 that first encounters the medium, i.e. the leading end of the aerofoils, is marked with reference numeral 14; and the end of the aerofoils at which the medium leaves the aerofoils, i.e. the trailing end of the aerofoils, is marked with reference numeral 15 and is located at the trailing edge 3 of the blade 1.

Figures 3 and 4 also show that the amplitude of the undulated structure becomes smaller towards the leading edge of the blade. The amplitude of the undulated structure is preferably 0.3 to 0.5 x d at the trailing edge 3 of the blade. With said arrangement, the transition point between the undulated structure and the smooth section of the blade is continuous and does not comprise any significant discontinuities, which is advantageous in terms of aerodynamic properties of the blade.

Circles 6 in Figures 3 and 5 illustrate tubular turbulent flows at the trailing edge of the blade. Turbulent flows 6 leave the blade in the direction of the trailing edge, substantially opposite to the direction of motion of the blade. Turbulent flows may be referred to as turbulence tubes 6. The rotation direction of flows forming the turbulence tubes 6, which may be referred to as the rotation direction of the turbulence tubes 6, depends on whether the angle α shown in Figure 2 is bigger or smaller than 0. The angle α is an angle of the ridge parts 4 and the valley parts 5 to the direction of motion of the blade, i.e. to the direction of flow (main flow). On the opposite sides of the blade, the sign of the angle α changes and the rotation direction of the turbulence tubes is opposite. Thanks to the opposite rotation directions, the turbulence tubes do not cause losses when colliding with one another. Figures 3, 5, 7 and 8 illustrate the rotation directions of the turbulence tubes 6. Figure 8 also shows that the turbulence tubes 6 leave the blade in the direction E, which is basically opposite to the direction of motion A of the blade and mainly corresponds to the flow direction of the medium.

The diameter of the turbulence tubes 6 corresponds to the distance d between the ridges 4, see Figure 3.

Turbulent flows described above displace the flowing matter in an efficient and regular manner.

Figure 9 shows an alternative manner of implementing the aerofoils of a blade. Also the undulated structure of Figure 9 provides turbulence tubes.

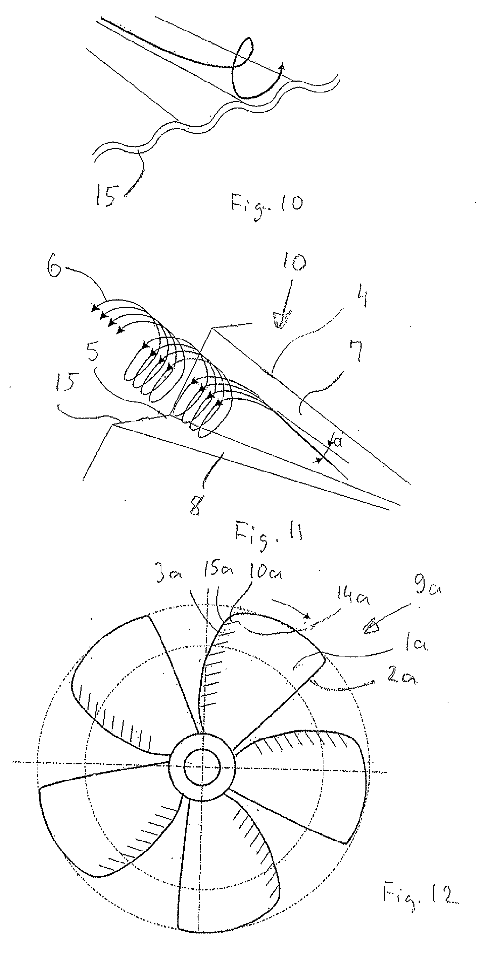

Figures 10 and 11 illustrate how the turbulence tube 6 is produced in the constructions of Figure 7 and 9, respectively, by means of aerofoils. In Figure 11, a slight positive pressure is produced at a flank 7 when the medium collides with it. A small negative pressure is produced at an opposite flank 8. The pressure difference and a steering effect of the flank produce a desired vortex. A corresponding phenomenon takes place in the implementation of Figure 10.

Figure 12 shows a propeller 9a, which may be a propeller used in water or air. More generally put, the medium of the propeller is a liquid or a gas. In the figure, the same reference numerals are used for the corresponding parts as in Figure 1. The propeller 9a comprises five blades 1a, which are provided in the region of their trailing edge 3a with aerofoils 10a according to Figure 1 by means of the ridge parts and the undulation parts. Similar tubular turbulent flows are produced behind the rear edges 3a of the blades 1a of the propeller 9a as was described above; for simplicity, they are not marked in Figure 12.

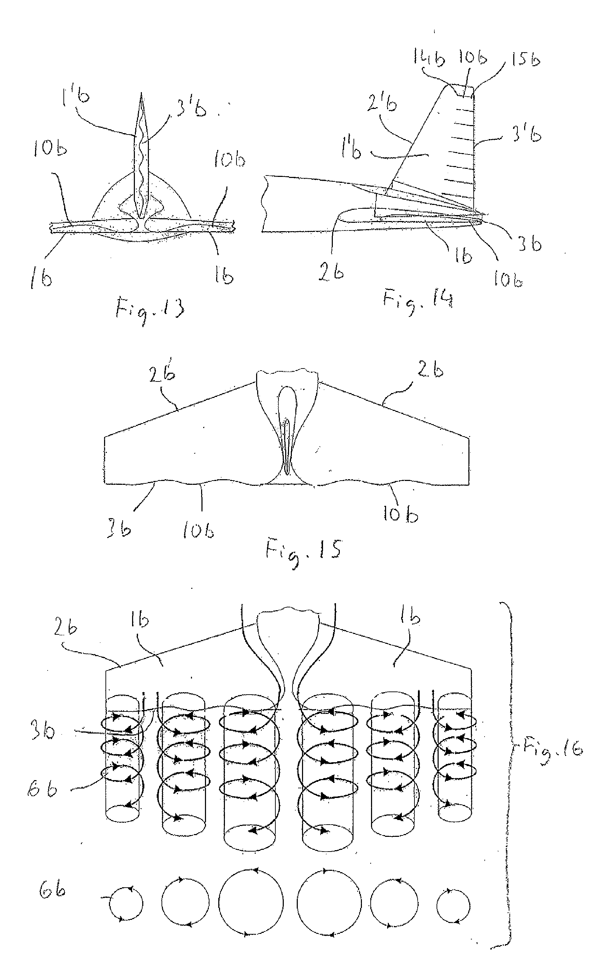

Figures 13 to 16 illustrate how the invention is applied to an aircraft. The figures use the same reference numerals for the corresponding parts as Figures 2 and 12. Figure 13 shows the tail of an aircraft from behind, Figure 14 from the side, and Figure 15 from above. Figures 13 and 14 illustrate that aerofoils 10b are provided according to Figure 1 at horizontal tail wings 1 b and 1 b as well as the vertical tail wing 1'b. Figure 16 illustrates how air flows on the horizontal tail wings and behind them. It can be seen that flows in the shape of turbulence tubes 6b exit the trailing edge 3b of the tail wings 1b. In the lower part of Figure 16, the turbulent flows 6b, which leave the tail wings 1 b, are turned 90 degrees with respect to the turbulent flows 6b shown in the upper part of Figure 16. The main wings (not shown) of the aircraft are preferably provided with similar aerofoils. At the tip of the wing the diameter of turbulent flows is arranged to be smaller than close to the root of the wing, which generates a high turbulence concentration with as small amount of energy as possible. At the root of the wing the turbulent flows (vortexes) roll against one another, wherefore hardly any energy is required and the diameter of turbulent flows is not of great significance.

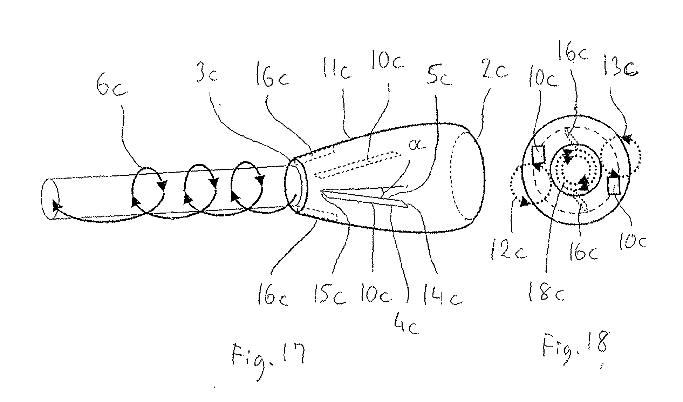

Figures 17 to 18 illustrate how the invention is applied to a jet engine. In the figures, the same reference numerals are used for the corresponding parts as in Figures 2, 4 and 14. Figure 17 shows the jet engine from the side and in Figure 18 from behind. Reference numeral 2c represents the front end of the jet engine and reference numeral 3c its rear end. On the surface of the casing 11c of the jet engine is diametrically arranged two aerofoils 10c at an angle to the longitudinal axis of the jet engine in such a manner that they produce tubular turbulent air flows 12c and 13c on both sides of the rear end 3c of the jet engine. The leading end of the aerofoils 10c, which encounters the flowing medium, is marked with reference numeral 14c, and the trailing end of the aerofoils, which is close to the rear end 3c of the jet engine, is marked with reference numeral 15c (see Figure 17). The leading end 14c and the trailing end 15c define a straight line, which is at an angle to the longitudinal axis of the jet engine. In practice it can be said that this angle corresponds to an angle of the aerofoils 10 to the longitudinal axis of the jet engine, even though the aerofoils would be slightly curved. The trailing end 15c of the aerofoils 10c is close to the rear end 3c of the jet engine. A tubular turbulent flow 6c of exhaust gas is produced by means of corresponding, inner aerofoils 16c. The aerofoils 16c, which are at an angle to the longitudinal axis of the jet engine, are displaced by 60 to 90 degrees with respect to the aerofoils 10c, as shown by Figure 18. Circles 18c in the middle of Figure 18 illustrate rotation, i.e. circular motion, of exhaust gases inside the casing 11c of the jet engine. In the construction of Figures 17 and 18, adjacent rolling tubular flows rotating in the opposite directions are produced on the trailing side of the jet engine. The flows 12c and 13c settle on both sides of the flow 6c. For simplicity, these tubular turbulent air flows are not shown in Figure 17.

The number of aerofoils 10c, 16c (aerofoil pairs) inside the casing 11c and on the outer surface may vary.

A preferred application of the invention is a rotor blade/rotor blades of a helicopter (not shown), which may be said to be similar to that/those in Figure 2.

In the above, the invention is only described by means of examples, wherefore it is noted that the details of the invention may be implemented in various ways within the scope of the attached claims. Consequently, the shape, number and size of the aerofoils may vary and, typically, do vary according to the application. If the construction comprises only one flow channel, the diameter thereof should be small. In addition, the location and angle thereof in the construction as well as the construction itself, to which they are applied, may vary. The same side of the construction may comprise aerofoils, the angle of which is smaller than zero or bigger than zero.

## Claims

1. An aero- or hydrodynamic construction, which is arranged to be in relative motion with respect to a medium, the construction comprising a front end (2, 2a, 2b, 2c) where the medium is encountered and a rear end (3, 3a, 3b, 3c) where the medium exits the construction, the construction comprising an aerofoil (10, 10a, 10b, 10c, 16c) with an end (14, 14a, 14b, 14c) for encountering the medium and an end (15, 15a, 15b, 15c) for leaving the medium, **characterized in that** the aerofoil comprises a ridge part (4, 4c) and a valley part (5, 5c), which constitute a flow channel which is set at an angle (α) of more than 3 degrees to the direction of motion of the construction in order to remove the medium in the form of tubular turbulent flow (6, 6a, 6b, 6c, 12c, 13c) from the rear end (3, 3a, 3b, 3c) of the construction, the main direction of the turbulent flow being substantially opposite to the direction of motion of the construction.

2. A construction as claimed in claim 1, **characterized in that** the construction is a jet engine and that there are at least two aerofoils (16c) which are arranged diametrically to one another inside the jet engine casing (11c), the aerofoils being arranged to guide away the exhaust gases of the jet engine from the rear end of the jet engine in the form of a tubular turbulent flow (6c), and additionally at least two aerofoils (10c) which are arranged diametrically to one another on the outer surface of the jet engine casing (11c) to produce tubular air turbulent flows (12c, 13c), whereby the aerofoils (10c) provided on the surface of the casing are arranged to guide the tubular air turbulent flows (12c, 13c) in a rolling manner on both sides of the tubular turbulent flow (6c) of the exhaust gases.

3. A construction as claimed in claim 1, **characterized in that** construction is a wing or blade (1, 1 a, 1b) comprising a leading edge (2, 2a, 2b) constituting the front end of the construction, and a trailing edge (3, 3a, 3b) constituting the rear end of the construction and comprising an undulated region, from which flow channels consisting of ridge parts (4) and valley parts (5) extend towards the leading edge of the wing or blade (1, 1a, 1b), the flow channels being at said angle (α) to the direction of motion (A) of the wing or blade in order to produce, on the trailing side of the wing or blade (1, 1a, 1b), a plurality of adjacent tubular turbulent flows (6, 6a, 6b) having alternately opposite rotation directions.

4. A construction as claimed in claim 3, **characterized in that** the leading edge (2, 2a, 2b) of the wing or blade is free of ridge parts (4) and valley parts (5), whereby the flow channels extending from the undulated region of the wing or blade towards the leading edge of the wing or blade extend only to a part of the width of the wing or blade (1, 1a, 1b).

5. A construction as claimed in claim 4, **characterized in that** the length (c) of the aerofoils (10, 10a, 10b) is 0.2 to 0.6 x the height between the ridge and the valley.

6. A construction as claimed in any one of the preceding claims 3 to 5, **characterized in that** the flow channels formed by the aerofoils (10, 10a, 10b) are at an angle (α) of 5 to 50 degrees to the direction of motion (A) of the wing or blade (1, 1a, 1b).

7. A construction as claimed in any one of the preceding claims 3 to 6, **characterized in that** the ridge parts (4) and the valley parts (5) form, at the trailing edge (3, 3a, 3b) of the wing or blade (1, 1a, 1b) a sinusoidal wave structure where the distance (d) between the ridge parts is 30 to 200 mm.

8. A construction as claimed in any one of the preceding claims 3 to 7, **characterized in that** the blade (1) is a rotor blade of a wind power plant.

9. A construction as claimed in any one of the preceding claims 3 to 7, **characterized in that** the blade (1) is a helicopter rotor blade.

10. A construction as claimed in claim 7 or 8, **characterized in that** the undulated region is formed at least in the region of the blade (1) tip.

11. A construction as claimed in any one of the preceding claims 3 to 7, **characterized in that** the wing (1 b, 1'b) is an aircraft wing.

12. A construction as claimed in claims 3 to 7, **characterized in that** the blade (1a) is a propeller (9a) blade.
